# EUROPEAN PATENT APPLICATION

(11) **EP 4 757 282 A1**
(43) Date of publication of application: **10.06.2026**
(21) Application number: 24860207.0
(22) Date of filing: 31.07.2024
(51) Int. Cl.: H04L 65/1096, H04L 65/1073, H04L 65/1016, H04L 65/1104, H04W 8/20, H04W 4/16

(54) **COMMUNICATION SYSTEM INCLUDING PLURALITY OF SUBSCRIBER IDENTIFICATION MODULES AND OPERATING METHOD THEREOF**

(30) Priority: 28.08.2023 KR 20230112928; 27.09.2023 KR 20230131097
(71) Applicant: Samsung Electronics Co., Ltd., Suwon-si, Gyeonggi-do 16677 (KR)
(72) Inventor: LEE, Insoo, Suwon-si, Gyeonggi-do 16677 (KR); SHIN, Chungho, Suwon-si, Gyeonggi-do 16677 (KR); EOM, Taewon, Suwon-si, Gyeonggi-do 16677 (KR); PARK, Jiwon, Suwon-si, Gyeonggi-do 16677 (KR); LEE, Kyunghoon, Suwon-si, Gyeonggi-do 16677 (KR); LEE, Jongphil, Suwon-si, Gyeonggi-do 16677 (KR)
(74) Representative: Nederlandsch Octrooibureau
(86) International application number: PCT/KR2024/011199
(87) International publication number: WO 2025/048286

(57) **Abstract**

This IP multimedia subsystem (IMS) server may comprise a memory and a processor, wherein the processor: receives, from an electronic device which includes a first subscriber identification module for storing first subscriber identification information and a second subscriber identification module for storing second subscriber identification information, a message that requests IP multimedia subsystem (IMS) registration of the electronic device; proceeds with IMS registration for the second subscriber identification module of the electronic device on the basis of the second subscriber identification information included in the message; on the basis of receiving, from an external electronic device, a request for a call to the electronic device, makes a call connection request to the electronic device by using the second subscriber identification module; on the basis that a call connection request time for the electronic device exceeds a specified level, transmits, to the external electronic device, a message indicating that the electronic device is on a call; receives, from the electronic device, a message including information on a start time and an end time of a call using the first subscriber identification module; and on the basis of the received message, identifies whether there has been a call connection request using the second subscriber identification module between the start time and the end time of the call using the first subscriber identification module.

## Description

### [Technical Field]

The disclosure relates to a communication system and/or an electronic device and, more specifically, to a communication system including multiple subscriber identity modules (SIMs) and a method for operating the same. The communication system may include an electronic device and/or a server, for example.

### [Background Art]

An electronic device may include a subscriber identity module (SIM) for managing personal information related to various functions such as user authentication, billing, and security functions.

The electronic device may perform wireless communication, based on subscriber identity information stored in the subscriber identity module (or SIM). In case that the electronic device includes multiple subscriber identity modules, the electronic device may perform wireless communication, based on subscriber identity information stored in each subscriber identity module.

The electronic device may perform wireless communication using a dual SIM. The dual SIM may include two SIM card slots or may additionally include a software-based eSIM in addition to a physical SIM. The electronic device may use two circuits in one UE by using a dual SIM.

There may be various types of dual SIM support schemes according to the hardware structure mounted in the UE. The electronic device according to the disclosure is directed to a dual SIM dual standby (DSDS) scheme in which multiple SIMs are simultaneously in a standby state and, if one of the SIMs is in a call state, the other SIMs become unusable.

### [Disclosure of Invention]

### [Technical Problem]

A communication system may inform device C that, in a situation in which UE A is making a call with UE B, if UE C makes a call request to UE A, and if UE does not receive the call for a specific time, the call cannot be received. Thereafter, at a timepoint at which UE A can make a call, the communication system may inform UE A that there was a call attempt from UE C through a text message.

Alternatively, in case that a call has been received using a number corresponding to the second subscriber identity module of UE A but the call is not received, the communication system may automatically make switching such that the call can be received with the number corresponding to the first subscriber identity module of the UE A. The communication system may provide a call forwarding service such that UE C can identify that UE A is on a call, and may also inform UE A that UE C is attempting to make a call.

However, the services provided by the communication system may not start until a ringing tone is emitted for a certain time (e.g., 15 seconds or 30 seconds) and the system enters a voice mailbox connection step. Thus, if the call is terminated before entering the voice mailbox connection step, the electronic device may have a limitation in that it is difficult to identify any missed call to the number corresponding to the second subscriber identity module during a call to the number corresponding to the first subscriber identity module.

In addition, the electronic device may also experience a situation in which, the call to the number corresponding to the first subscriber identity module lasts beyond the designated time, incoming call notification text messages are received late or fail to be received. In addition, there is a limitation in that serviced provided by the communication system described above can be supported only by subscribing to a separate paid plan.

An IP multimedia subsystem (IMS) server may include a memory and a processor, and the processor may receive a message requesting IP multimedia subsystem (IMS) registration of an electronic device from an electronic device including a first subscriber identification module for storing first subscriber identification information and a second subscriber identification module for storing second subscriber identification information, may perform IMS registration regarding the second subscriber identification module of the electronic device, based on the second subscriber identification information included in the message, may request a call connection using the second subscriber identification module to the electronic device, based on a call request regarding the electronic device received from an external electronic device, may transmit a message indicating that the electronic device is making a call to the external electronic device, based on the call connection request time regarding the electronic device exceeding a specified level, may receive a message including information about a call start time and a call end time using the first subscriber identification module from the electronic device, and may identify whether there was a call connection request using the second subscriber identification module between the call start time and the call end time using the first subscriber identification module, based on the received message.

A communication system may include an electronic device configured to support dual subscriber identity module dual standby (DSDS), a first server configured to handle IP multimedia subsystem (IMS) registration of a first subscriber identity module (SIM), a second server configured to handle IP multimedia subsystem (IMS) registration of a second subscriber identity module (SIM), and a processor. The processor may control the first subscriber identity module to transmit a message indicating termination of a call to the second subscriber identity module, based on termination of a call between the electronic device and the first external electronic device using the first subscriber identity module, may transmit, using the second subscriber identity module, information regarding the start time and the end time of the call using the first subscriber identity module to the second server, may identify history of a call requested to the second subscriber identity module between the start time and the end time of the call using the first subscriber identity module, by using the second server, may transmit, to the electronic device, a message indicating that there was a call attempt by the second external electronic device, based on existence of a call request from the second external electronic device, and may identify history of a call requested to the second subscriber identity module between the start time and the end time of the call using the first subscriber identity module, by using the second server.

A method for operating a communication system may include: in case that an electronic device registers IMS of a second subscriber identity module while a first subscriber identity module is IMS-registered on a first server, transmitting a session initiation protocol (SIP) REGISTER message including a universally unique ID (UUID) of the first subscriber identity module to a second server by using the second subscriber identity module; after the second subscriber identity module is IMS-registered on the second server, transmitting information including a universally unique ID (UUID) of the first subscriber identity module to the first server by using the second server; in a situation in which a call connection between the first external electronic device and the electronic device is established by using the first subscriber identity module, transmitting information indicating that the first subscriber identity module is making a call to the second server; based on detecting a call request using the second subscriber identity module from the second external electronic device while the first subscriber identity module is making a call, transmitting a message indicating that the electronic device is currently making a call to the second external electronic device, by using the second server; and storing a missed call from the second external electronic device in the second server.

A communication system including multiple subscriber identification modules and a method for operating the same according to the disclosure may instantly inform the recipient of calls that may be missed due to functional and structural limitations of an electronic device using a dual sim dual standby (DSDS) scheme.

A communication system including multiple subscriber identification modules and a method for operating the same according to the disclosure may, in case that the recipient of an electronic device using a dual sim dual standby (DSDS) scheme is making a call, instantly provide the originator with information indicating that the recipient is making a call.

### [Brief Description of Drawings]

FIG. 1 is a block diagram of an electronic device in a network environment according to various embodiments.
FIG. 2 is a block diagram of an electronic device for supporting 4G network communication and 5G network communication according to an embodiment.
FIG. 3 illustrates a protocol stack structure of a 4G communication and/or 5G communication network according to an embodiment.
FIG. 4 is a block diagram of an electronic device supporting multiple subscriber identification modules according to an embodiment.
FIG. 5A and FIG. 5B illustrate an embodiment for controlling multiple subscriber identity modules in a communication system according to the disclosure.
FIG. 6A and FIG. 6B illustrate an embodiment of controlling multiple subscriber identification modules in a communication system according to the disclosure.
FIG. 7 illustrates a configuration for managing a missed call in a communication system according to an embodiment.
FIG. 8 is a flowchart illustrating an embodiment of controlling multiple subscriber identification modules in a second server according to the disclosure.
FIG. 9 is a flowchart illustrating an embodiment of controlling multiple subscriber identity modules in a communication system according to the disclosure.
FIG. 10 is a flowchart illustrating an embodiment of controlling multiple subscriber identification modules in a second server according to the disclosure.
FIG. 11 is a flowchart illustrating an embodiment for controlling multiple subscriber identity modules in a communication system according to the disclosure.

### [Mode for the Invention]

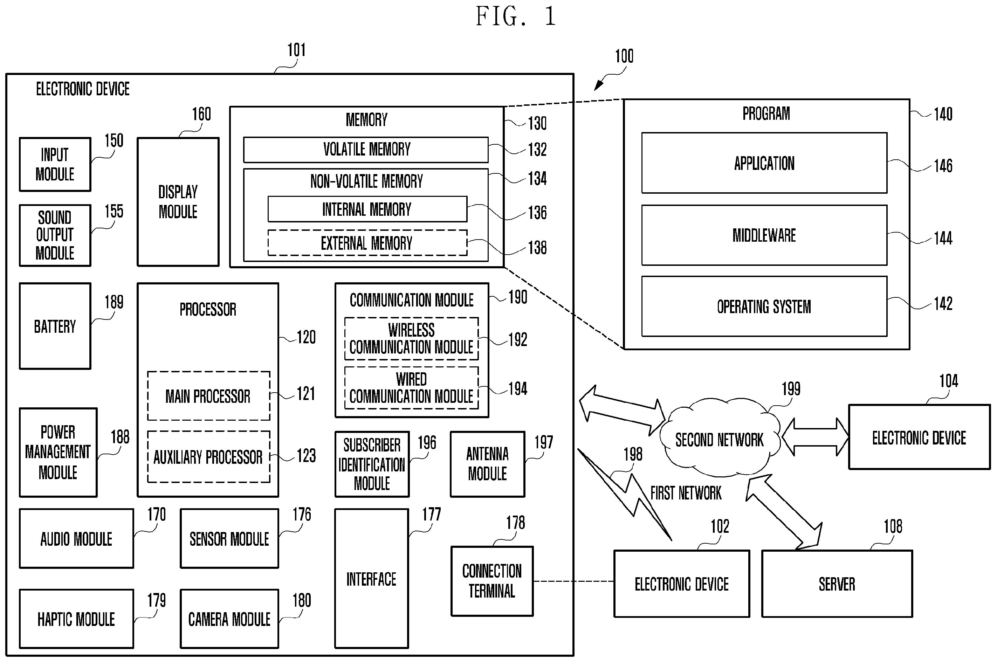

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

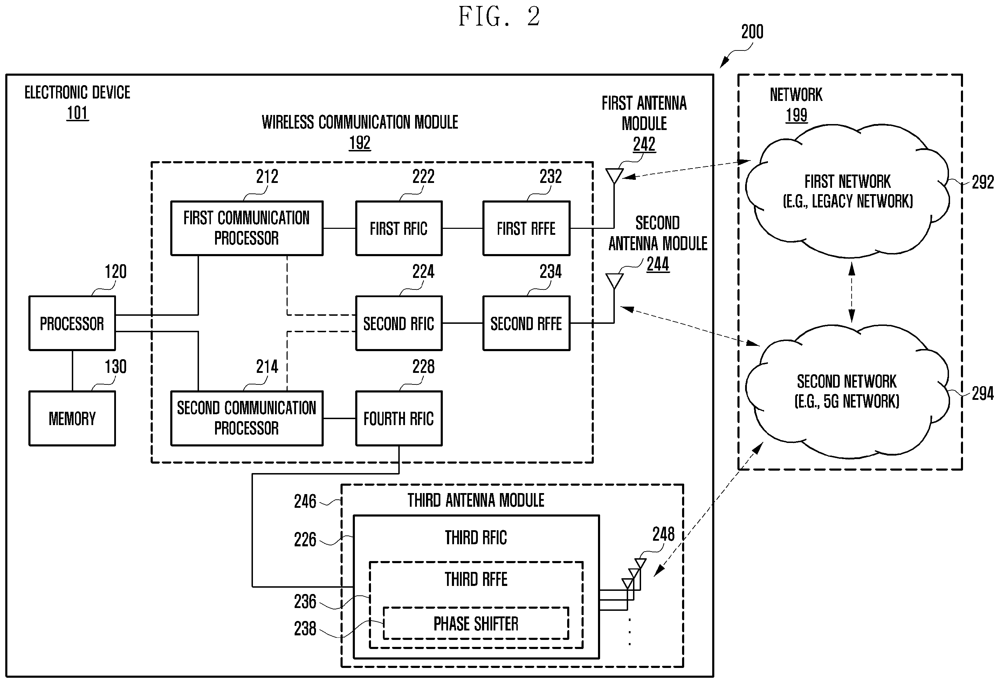

FIG. 2 is a block diagram 200 of an electronic device 101 for supporting 4G network communication and 5G network communication according to an embodiment.

Referring to FIG. 2, according to an embodiment, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor 120 and a memory 130. The network 199 may include a first network 292 and a second network 294. According to another embodiment, the electronic device 101 may further include at least one component among the components described in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least a part of the wireless communication module 192. According to another embodiment, the fourth RFIC 228 may be omitted or may be included as part of the third RFIC 226.

The first communication processor 212 may establish a communication channel in a band to be used for wireless communication with the first network 292 and may support legacy network communication through the established communication channel. According to an embodiment, the first network 292 may be a legacy network including a 2G, 3G, 4G, or long term evolution (LTE) network. The second communication processor 214 may support establishment of a communication channel corresponding to a designated band (e.g., about 6GHz to about 60GHz) among the bands to be used for wireless communication with the second network 294, and 5G network communication through the established communication channel. According to an embodiment, the second network 294 may be a 5G network (e.g., new radio (NR)) defined by 3GPP. Additionally, according to an embodiment, the first communication processor 212 or the second communication processor 214 may establish a communication channel corresponding to another designated band (e.g., about 6GHz or lower) among the bands to be used for wireless communication with the second network 294 and support 5G network communication through the established communication channel. According to an embodiment, the first communication processor 212 and the second communication processor 214 may be implemented in a single chip or a single package. According to an embodiment, the first communication processor 212 or the second communication processor 214 may be formed within a single chip or single package with the processor 120, the auxiliary processor 123, or the communication module 190.

According to an embodiment, the first communication processor 212 may transmit/receive data to/from the second communication processor 214. For example, data that has been classified to be transmitted through the second network 294 may be changed to be transmitted through the first network 292.

In this case, the first communication processor 212 may receive the transmission data from the second communication processor 214. For example, the first communication processor 212 may transmit/receive data to/from the second communication processor 214 through a processor-to-processor interface. As an example, the processor-to-processor interface may be implemented as a universal asynchronous receiver/transmitter (UART) (e.g., high speed-UART (HS-UART)) or a peripheral component interconnect bus express (PCIe) interface, but the type is not limited thereto. For example, the first communication processor 212 and the second communication processor 214 may exchange control information and packet data information by using a shared memory. As an example, the first communication processor 212 may transmit/receive various pieces of information, such as sensing information, information on output intensity, and resource block (RB) allocation information, to/from the second communication processor 214.

According to the implementation, the first communication processor 212 may not be directly connected to the second communication processor 214. In this case, the first communication processor 212 may transmit/receive data to/from the second communication processor 214 through the processor 120 (e.g., application processor). For example, the first communication processor 212 and the second communication processor 214 may transmit/receive data to/from the processor 120 (for example, application processor) through an HS-UART interface or a PCIe interface, but the type of the interface is not limited thereto. For example, the first communication processor 212 and the second communication processor 214 may exchange control information and packet data information with the processor 120 (e.g., application processor) by using a shared memory. According to an embodiment, the first communication processor 212 and the second communication processor 214 may be implemented in a single chip or a single package. According to an embodiment, the first communication processor 212 or the second communication processor 214 may be formed in a single chip or a single package together with the processor 120, the auxiliary processor 123, or the communication module 190.

The first RFIC 222 may convert a baseband signal generated by the first communication processor 212 into a radio frequency (RF) signal of about 700 MHz to about 3 GHz used in the first network 292 (e.g., legacy network) during transmission. During reception, an RF signal may be acquired from the first network 292 (e.g., legacy network) through an antenna (e.g., the first antenna module 242) and preprocessed through an RFFE (e.g., the first RFFE 232). The first RFIC 222 may convert the preprocessed RF signal to a baseband signal such that the same may be processed by the first communication processor 212.

The second RFIC 224 may convert a baseband signal generated by the first communication processor 212 or the second communication processor 214 to a RF signal (hereinafter, 5G Sub6 RF signal) in a Sub6 band (e.g., about 6GHz or less) used in the second network 294 (e.g., 5G network) during transmission. During reception, a 5G Sub6 RF signal may be acquired from the second network 294 (e.g., 5G network) through an antenna (e.g., second antenna module 244) and may be preprocessed through an RFFE (e.g., the second RFFE 234). The second RFIC 224 may convert the preprocessed 5G Sub6 RF signal into a baseband signal such that the same may be processed by a corresponding communication processor among the first communication processor 212 or the second communication processor 214.

The third RFIC 226 may convert a baseband signal generated by the second communication processor 214 to an RF signal (hereinafter, 5G Above6 RF signal) in a 5G Above6 band (e.g., about 6GHz to about 60GHz) to be used in the second network 294 (e.g., 5G network). During reception, a 5G Above6 RF signal may be acquired from the second network 294 (e.g., 5G network) through an antenna (e.g., the antenna 248) and may be preprocessed through the third RFFE 236. The third RFIC 226 may convert the preprocessed 5G above6 RF signal into a baseband signal such that the same may be processed by the second communication processor 214. According to an embodiment, the third RFFE 236 may be formed as a part of the third RFIC 226.

The electronic device 101 may include a fourth RFIC 228, separately from or as at least a part of the third RFIC 226, according to an embodiment. In this case, the fourth RFIC 228 may convert a baseband signal generated by the second communication processor 214 to an intermediate frequency (IF) band (e.g., about 9GHz to about 11GHz) RF signal (hereinafter, IF signal) and then transfer the IF signal to the third RFIC 226. The third RFIC 226 may convert the IF signal to a 5G Above6 RF signal. During reception, a 5G Above6 RF signal may be received from the second network 294 (e.g., 5G network) through an antenna (e.g., the antenna 248) and converted to an IF signal by the third RFIC 226. The fourth RFIC 228 may convert the IF signal into a baseband signal such that the same may be processed by the second communication processor 214.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or a single package. According to an embodiment, at least one of the first antenna module 242 or the second antenna module 244 may be omitted or may be combined with another antenna module to process RF signals in corresponding multiple bands.

According to an embodiment, the third RFIC 226 and the antenna 248 may be disposed on the same substrate to form the third antenna module 246. For example, the wireless communication module 192 or the processor 120 may be disposed on a first substrate (e.g., a main PCB). In this case, a third RFIC 226 may be disposed in a partial area (e.g., on the lower surface) of a second sub-substrate (e.g., sub-PCB) separate from the first sub-substrate, and an antenna 248 may be disposed in another partial area (e.g., on the upper surface) thereof, thereby forming a third antenna module 246. By placing the third RFIC 226 and the antenna 248 on the same substrate, it is possible to reduce the length of the transmission line therebetween. This may reduce the loss (e.g., attenuation) of signals in a high frequency band (e.g., about 6GHz to about 60GHz) used for 5G network communication, for example, by a transmission line. As a result, the electronic device 101 may improve the quality or speed of communication with the second network 294 (e.g., 5G network).

According to an embodiment, the antenna 248 may be formed as an antenna array including multiple antenna elements which may be used for beamforming. In this case, the third RFIC 226 may include multiple phase shifters 238 corresponding to multiple antenna elements, for example, as a part of the third RFFE 236. During transmission, each of the multiple phase shifters 238 may convert the phase of the 5G Above6 RF signal to be transmitted to the outside of the electronic device 101 (e.g., a base station of a 5G network) through a corresponding antenna element. During reception, each of the multiple phase converters 238 may convert the phase of a 5G Above6 RF signal received from the outside to an identical or substantially identical phase through a corresponding antenna element. This enables the electronic device 101 to transmit or receive signals to or from the outside through beamforming.

The second network 294 (e.g., 5G network) may be operated independently of the first network 292 (e.g., legacy network) (e.g., standalone (SA)), or operated in connection therewith (e.g., non-standalone (NSA)). For example, the 5G network may have only an access network (e.g., 5G radio access network (RAN) or next generation RAN (NG RAN)) and may have no core network (e.g., next generation core (NGC)). In such a case, the electronic device 101 may access the access network of the 5G network, and then access an external network (e.g., the Internet) under the control of the core network (e.g., evolved packet core (EPC)) of the legacy network. Protocol information (e.g., LTE protocol information) for communication with the legacy network or protocol information (e.g., new radio (NR) protocol information) for communication with the 5G network may be stored in the memory 130 and accessed by other components (e.g., the processor 120, the first communication processor 212, or the second communication processor 214).

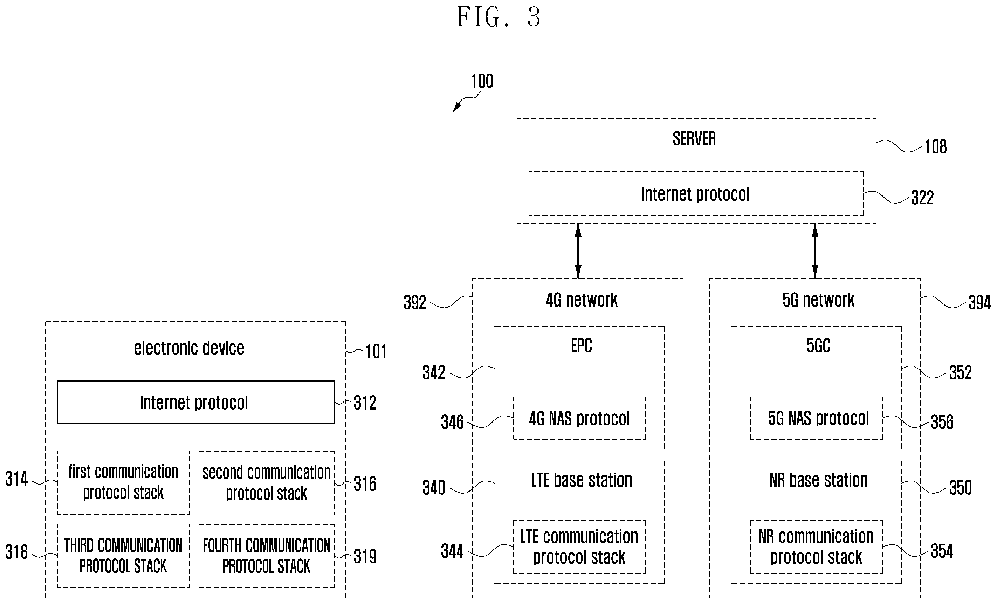

FIG. 3 is a diagram illustrating a protocol stack structure of a 4G communication and/or 5G communication network 100 according to an embodiment.

Referring to FIG. 3, according to an embodiment, the network 100 may include an electronic device 101, a 4G network 392, a 5G network 394, and a server 108.

According to an embodiment, the electronic device 101 may include an Internet protocol 312, a first communication protocol stack 314, a second communication protocol stack 316, a third communication protocol 318, and a fourth communication protocol 319. For example, the electronic device 101 may communicate with the server 108 through the 4G network 392 and/or the 5G network 394.

According to an embodiment, the electronic device 101 may perform Internet communication associated with the server 108 by using an internet protocol 312 (for example, transmission control protocol (TCP), user datagram protocol (UDP), or Internet protocol (IP)). For example, the Internet protocol 312 may be executed by the main processor (e.g., the main processor 121 in FIG. 1) included in the electronic device 101.

According to an embodiment, the electronic device 101 may perform wireless communication with the 4G network 392 by using the first communication protocol stack 314 and/or the third communication protocol stack 318. According to an embodiment, the electronic device 101 may wirelessly communicate with the 5G network 394 by using the second communication protocol stack 316 and/or the fourth communication protocol stack 319. For example, the first communication protocol stack 314, the second communication protocol stack 316, the third communication protocol 318, and the fourth communication protocol 319 may be executed by one or more communication processors (e.g., the wireless communication module 192 in FIG. 1) included in the electronic device 101.

According to an embodiment, the electronic device 101 may include multiple subscriber identity modules (for example, a first subscriber identity module and a second subscriber identity module). According to an embodiment, the electronic device 101 may communicate with the 4G network 392 and/or the 5G network 394, based on subscriber identity information (e.g., international mobile subscriber identity (IMSI)) stored in each of multiple subscriber identity modules (e.g., a first subscriber identity module and a second subscriber identity module).

According to an embodiment, the electronic device 101 may perform wireless communication for the first subscriber identity module by using the first communication protocol stack 314 and/or the second communication protocol stack 316. According to an embodiment, the first communication protocol stack 314 may include various protocols for wireless communication with the 4G network 392. According to an embodiment, the second communication protocol stack 316 may include various protocols for wireless communication with the 5G network 394. According to an embodiment, when performing communication by using the first subscriber identity module, the electronic device 101 may perform wireless communication with the 4G network 392 and/or the 5G network 394 by using the first communication protocol stack 314 and/or the second communication protocol stack 316.

According to an embodiment, the electronic device 101 may perform wireless communication for the second subscriber identity module by using the third communication protocol stack 318 and/or the fourth communication protocol stack 319. According to an embodiment, the third communication protocol stack 318 may include various protocols for wireless communication with the 4G network 392. According to an embodiment, the fourth communication protocol stack 319 may include various protocols for wireless communication with the 5G network 394. According to an embodiment, when performing communication by using the second subscriber identity module, the electronic device 101 may perform wireless communication with the 4G network 392 and/or the 5G network 394 by using the third communication protocol stack 318 and/or the fourth communication protocol stack 319.

According to an embodiment, the server 108 may include an Internet protocol 322. The server 108 may transmit and/or receive data related to the Internet protocol 322 with the electronic device 101 through the 4G network 392 and/or the 5G network 394. According to an embodiment, the server 108 may include a cloud computing server existing outside the 4G network 392 or 5G network 394. According to another embodiment, the server 108 may include an edge computing server (or a mobile edge computing (MEC) server) located inside at least one of the 4G network 392 or the 5G network 394.

According to an embodiment, the 4G network 392 may include a long term evolution (LTE) base station 340 and an evolved packet core (EPC) 342. The LTE base station 340 may include an LTE communication protocol stack 344. The EPC 342 may include a 4G non-access stratum (NAS) protocol 346. The 4G network 392 may perform LTE wireless communication with the electronic device 101 by using the LTE communication protocol stack 344 and the 4G NAS protocol 346.

According to an embodiment, the 5G network 394 may include a new radio (NR) base station 350 and a 5^{th} generation core (5GC) 352. The NR base station 350 may include an NR communication protocol stack 354. The 5GC 352 may include a 5G NAS protocol 356. The 5G network 394 may perform NR wireless communication with the electronic device 101 by using the NR communication protocol stack 354 and the 5G NAS protocol 356.

According to an embodiment, the first communication protocol stack 314, the second communication protocol stack 316, the third communication protocol 318, the fourth communication protocol 319, the LTE communication protocol stack 344, and the NR communication protocol stack 354 may include a control plane protocol for transmitting/receiving a control message and a user plane protocol for transmitting/receiving user data. For example, the control message may include a message related to at least one of security control, bearer configuration, authentication, registration, or mobility management. For example, the user data may include remaining data other than the control message.

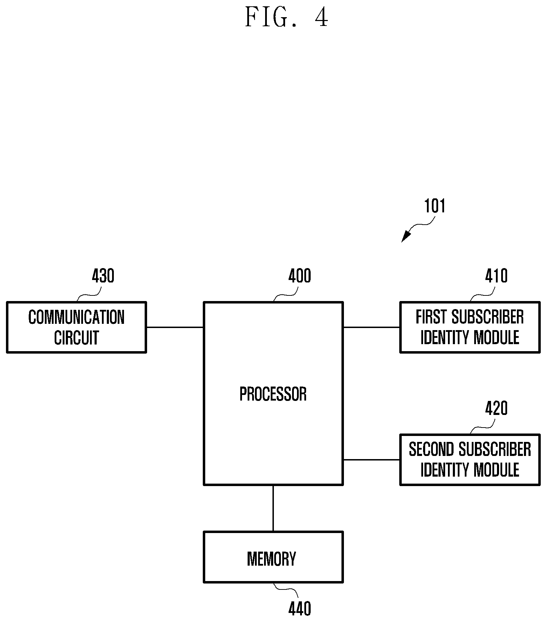

FIG. 4 is a block diagram of an electronic device supporting multiple subscriber identity modules according to an embodiment.

According to an embodiment referring to FIG. 4, the electronic device 101 may include a processor 400, a first subscriber identity module (SIM) 410, a second subscriber identity module 420, a communication circuit 430, and/or a memory 440. According to an embodiment, the processor 400 may be substantially identical to the processor 120 in FIG. 1 or may be included in the processor 120. The first subscriber identity module 410 and the second subscriber identity module 420 may be substantially identical to or included in the subscriber identity module 196 in FIG. 1. The communication circuit 430 may be substantially identical to or included in the wireless communication module 192 in FIG. 1. The memory 440 may be substantially identical to or included in the memory 130 in FIG. 1. According to an embodiment, the processor 400 may be connected to the first subscriber identity module 410, the second subscriber identity module 420, the communication circuit 430, and/or the memory 440 operatively, functionally, and/or electrically. According to an embodiment, the electronic device 101 may include a first subscriber identity module 410 and a second subscriber identity module 420, but is not limited thereto. The electronic device 101 may include three or more subscriber identity modules.

According to an embodiment, the subscriber identity modules 410 and 420 may store subscriber identity information (e.g., international mobile subscriber identity (IMSI)) for wireless network access, authentication, accounting, and/or security.

According to an embodiment, the first subscriber identity module 410 may store first subscriber identity information (e.g., international mobile subscriber identity (IMSI)) to be used by the electronic device 101 to access (or communicate with) the first cellular network and/or the second cellular network operated by the first communication operator (or first mobile communication operator). As an example, the first and/or second cellular networks may include at least one of a 2G (generation) network, a 3G network, a 4G network (e.g., long term evolution (LTE)), or a 5G network (e.g., new radio (NR)).

The first IMS stack (or protocol stack) corresponding to the first subscriber identity module 410 may recognize the first subscriber identity module 410 and transmit and receive a message (e.g., a session initiation protocol (SIP) message) for attempting IMS registration to/from an external server or an external electronic device.

According to an embodiment, the second subscriber identity module 420 may store second subscriber identity information (e.g., IMSI) to be used by the electronic device 101 to access (or communicate with) the third cellular network and/or the fourth cellular network operated by the second communication operator (or second mobile communication operator). As an example, the third cellular network and/or fourth cellular network may include at least one of a 2G network, a 3G network, a 4G network (e.g., LTE), or a 5G network (e.g., NR).

The second IMS stack (or protocol stack) corresponding to the second subscriber identity module 420 may recognize the second subscriber identity module 420 and transmit and receive a message (e.g., session initiation protocol (SIP) message) for attempting IMS registration to/from an external server or external electronic device.

According to an embodiment, the first subscriber identity module 410 and/or the second subscriber identity module 420 may be configured in the first type in which the same is directly embedded in the electronic device 101 (e.g., embedded SIM (eSIM) or embedded universal integrated circuit card (eUICC)). For example, in case that the first subscriber identity module 410 and/or the second subscriber identity module 420 are configured in the first type, the electronic device 101 may store information related to the first subscriber identity module 420 and/or the second subscriber identity module 530 in the security chip disposed on the circuit board of the electronic device 101 through remote SIM provisioning during processes of manufacturing the electronic device 101.

According to an embodiment, the first subscriber identity module 410 and/or the second subscriber identity module 420 may be configured in the second type (e.g., integrated circuit (IC) card) and mounted in a slot of the electronic device 101.

According to an embodiment, the processor 400 may control components (e.g., the first subscriber identity module 410, the second subscriber identity module 420, the communication circuit 430, and/or the memory 440) of the electronic device 101. According to an embodiment, the processor 400 may include an application processor (AP) (e.g., the main processor 121 in FIG. 1) and/or a communication processor (CP) (e.g., the auxiliary processor 123 or the communication module 190 in FIG. 1).

Alternatively, the electronic device 101 may include a server. For example, the electronic device 101 may be an IP multimedia subsystem (IMS) server which performs IP multimedia subsystem (IMS) registration regarding a subscriber identity module (SIM).

The server may include a processor (e.g., the processor 120 in FIG. 1) and a memory (e.g., the memory 130 in FIG. 1). The server's processor 120 may have a configuration different from that of the processor 400 of the electronic device (e.g., UE).

According to an embodiment, the processor 120 may receive, from an electronic device (e.g., UE A) including a first subscriber identity module for storing first subscriber identity information and a second subscriber identity module for storing second subscriber identity information, a message for requesting IP multimedia subsystem (IMS) registration of the electronic device, and may perform IMS registration regarding the second subscriber identity module of the electronic device, based on the second subscriber identity information included in the message. The processor 120 may request a call connection to the electronic device by using the second subscriber identity module, based on receiving a call request regarding the electronic device from an external electronic device (e.g., UE B), and may transmit, to the external electronic device, a message indicating that the electronic device is having a call, based on the call connection request time regarding the electronic device exceeding a designated level.

According to an embodiment, the processor 120 may receive a message including information regarding a call start time and a call end time using the first subscriber identity module from the electronic device, and may identify whether there was a call connection request using the second subscriber identity module between the call start time and the call end time using the first subscriber identity module, based on the received message. The processor 120 may transmit, to the electronic device, a message indicating that there is a missed call from an external electronic device, based on existence of a call connection request using the second subscriber identity module between the call start time and the call end time using the first subscriber identity module.

According to an embodiment, the processor 120 may receive a message including information regarding a call start time and a call end time using the first subscriber identity module from the electronic device (e.g., UE A), and may identify whether there was a call connection request using the second subscriber identity module between the call start time and the call end time using the first subscriber identity module, based on the received message. The processor 120 may transmit, to the external electronic device (e.g., UE B), a message indicating that the electronic device is available for a call, based on existence of a call connection request using the second subscriber identity module between the call start time and the call end time using the first subscriber identity module.

According to an embodiment, the processor 120 may store, in the memory 130, the time at which a call request has been received, based on existence of a call connection request using the second subscriber identity module between the call start time and the call end time using the first subscriber identity module.

The processor 120 may receive a message requesting IP multimedia subsystem (IMS) registration of an electronic device (e.g., UE A) from the electronic device including a first subscriber identity module for storing first subscriber identity information and a second subscriber identity module for storing second subscriber identity information, and may perform IMS registration of the second subscriber identity module of the electronic device, based on the second subscriber identity information included in the message. In case that first subscriber identity information is included in the message, the processor 120 may identify that the electronic device supports a dual SIM dual standby (DSDS) mode.

Upon receiving, from another IMS server corresponding to the first subscriber identity information, a message indicating that the electronic device is currently performing a call through the first cellular network corresponding to the first subscriber identity information, the processor 120 may identify that the electronic device is currently performing a call through the first cellular network. Based on receiving a call request regarding the electronic device from the external electronic device (e.g., UE B), the processor 120 may transmit a message indicating that the electronic device is making a call to the external electronic device.

According to an embodiment, upon receiving, from an IMS server corresponding to the first subscription identity information, a message indicating that the electronic device (e.g., UE A) has ended a call through the first cellular network corresponding to the first subscription identity information, the processor 120 may identify that the electronic device has ended a call through the first cellular network, and may transmit, to the electronic device, a message indicating that there is a missed call from an external electronic device.

According to an embodiment, upon receiving, from an IMS server corresponding to the first subscription identity information, a message indicating that the electronic device has ended a call through the first cellular network corresponding to the first subscription identity information, the processor 120 may identify that the electronic device has ended a call through the first cellular network, and may transmit, to the external electronic device, a message indicating that the electronic device can make a call.

According to an embodiment, the processor 120 may transmit, using a session initiation protocol (SIP) message, a message indicating that there is a missed call from an external electronic device (e.g., UE B) to the electronic device (e.g., UE A) and/or transmit, using a session initiation protocol (SIP) message, a message indicating that the electronic device can now make a call to the external electronic device.

According to an embodiment, based on receiving a call request regarding the electronic device from an external electronic device while the electronic device is performing a call through the first cellular network, the processor 120 may store the time at which the call request was received from the external electronic device in the memory 130.

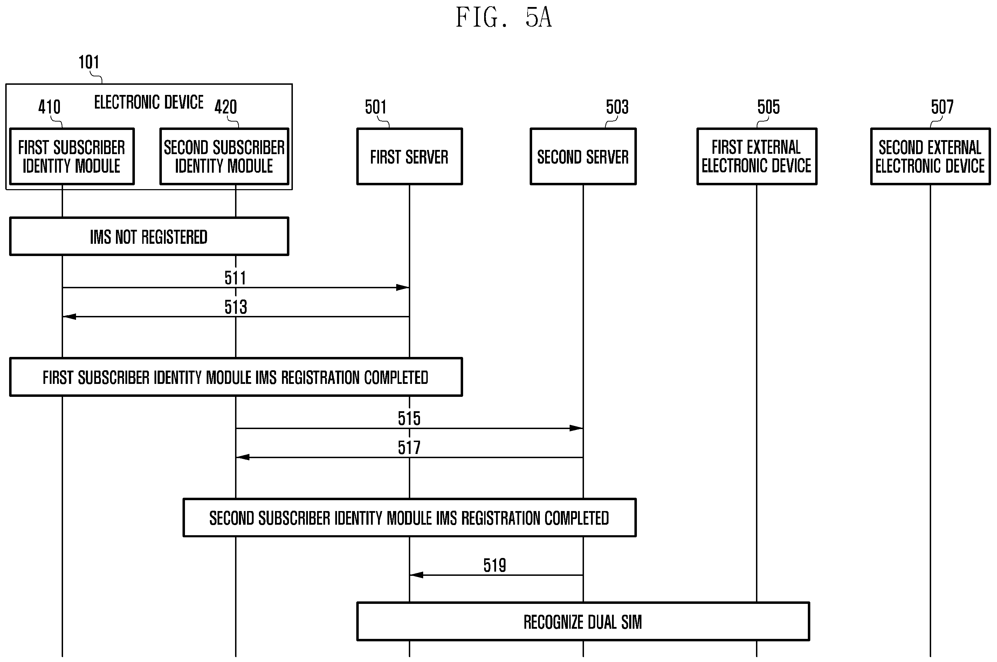

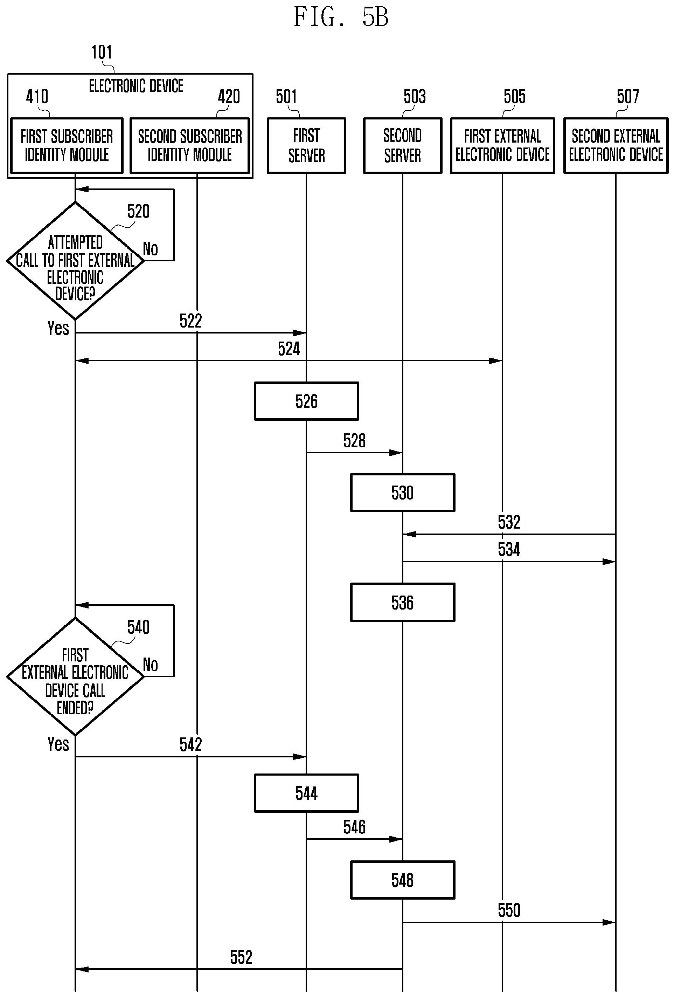

FIG. 5A and FIG. 5B illustrate an embodiment for controlling multiple subscriber identity modules in a communication system according to the disclosure.

The communication system may include an electronic device 101, a first server 501, a second server 503, a first external electronic device 505, and a second external electronic device 507. The electronic device 101 may include a first subscriber identity module 410 and a second subscriber identity module 420. The first subscriber identity module 410 and the second subscriber identity module 420 are as described in FIG. 4.

The first server 501 may include an IP multimedia subsystem (IMS) server of the first subscriber identity module 410. The second server 503 may include an IMS server of the second subscriber identity module 420. IMS registration may refer to a process in which the electronic device 101 makes registration on a network to use a service in a communication system. The service provider may determine which service may be provided to the electronic device 101, based on the IMS registration.

Hereinafter, a procedure for IMS registration on the first server 501 and operations for IMS registration on the second server 503 (operations 511 to 552) will be described. Respective operations may be changed in order, some operations may be omitted, or the operations may be performed in parallel.

The first server 501 and the second server 502 may be capable of information interworking through an inter-telecom provider contract. In a state in which neither the first subscriber identity module 410 nor the second subscriber identity module 420 has completed IMS registration, the first IMS stack (or protocol stack) corresponding to the first subscriber identity module 410 may transmit a message for attempting IMS registration to the first server 501.

In operation 511 of FIG. 5A, the first IMS stack (or protocol stack) corresponding to the first subscriber identity module 410 may transmit a message (e.g., SIP REGISTER) for attempting IMS registration to the first server 501. The message (e.g., SIP REGISTER) for IMS registration may not include information (e.g., universally unique ID (UUID)) of the second subscriber identity module 420.

In operation 513 of FIG. 5A, the first server 501 may transmit a message (e.g., SIP REGISTER 200 OK) indicating that IMS registration has been completed to the first subscriber identity module 410.

In a state in which IMS registration of the first subscriber identity module 410 has been completed, the second IMS stack corresponding to the second subscriber identity module 420 may transmit a message for attempting IMS registration to the second server 503. In operation 515, the second IMS stack corresponding to the second subscriber identity module 420 may transmit a message (e.g., SIP REGISTER) for attempting an IMS registration to the second server 503. The message (e.g., SIP REGISTER) for IMS registration may include information (e.g., universally unique ID (UUID)) of the first subscriber identity module 410. Specifically, the information (e.g., universally unique ID (UUID)) of the first subscriber identity module 410 may be included in the ex-contacts field in the SIP REGISTER message.

The SIP REGISTER message transmitted to the second server 503 from the second IMS stack corresponding to the second subscriber identity module 420 may include information as in [Table 1] below:

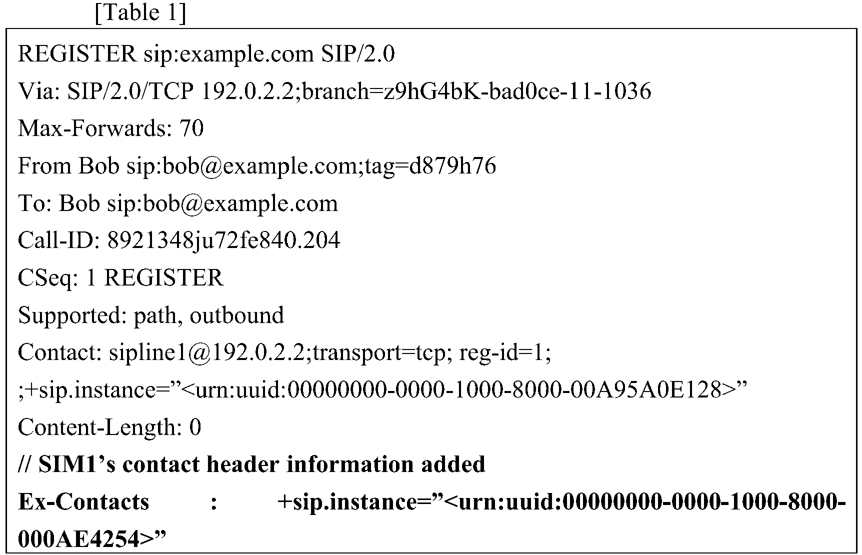

The second server 503 may identify that the electronic device 101 is currently using the first subscriber identity module 410 as a dual SIM and is in an IMS registration state, by using information (e.g., universally unique ID (UUID)) of the first subscriber identity module 410.

In case that the first subscriber identity module 410 has not completed IMS registration at the timepoint at which the second subscriber identity module 420 attempts IMS registration, information (e.g., universally unique ID (UUID)) of the first subscriber identity module 410 may not be included in the SIP REGISTER message. The above-described operations may be performed while sharing the IMS registration status with each other in the IMS stack in the modem managing multiple subscriber identity modules. Alternatively, the above-described operations may be performed in the IMS upper layer of the application processor end.

In operation 517 of FIG. 5A, the second server 503 may transmit a message (e.g., SIP REGISTER 200 OK) indicating that IMS registration of the second subscriber identity module 420 has been completed.

Thereafter, in operation 519 of FIG. 5A, the second server 503 may transmit, to the first server 501, a message indicating that the first subscriber identity module 410 and the second subscriber identity module 420 of the electronic device 101 have completed IMS registration as a dual SIM.

The second server 503 may transmit the UUID of the first subscriber identity module 410 to all IMS servers and may determine that the server from which a response is received is the first server 501.

Alternatively, the second server 503 may distinguish an operator based on a specific value of the UUID, and may determine the first server 501, based on the distinguished operator information.

Alternatively, the second server 503 may receive the UUID of the first subscriber identity module 410 from the electronic device 101 and may also receive operator-related information that may specify the operator of the first subscriber identity module 410 separately from the UUID. The second server 503 may search for the first server 501, based on the received operator-related information, and transmit the UUID of the first subscriber identity module 410.

In this process, the first server 501 and the second server 503 may identify (or recognize) that the first subscriber identity module 410 and the second subscriber identity module 420 are dual SIMs.

In operation 520 of FIG. 5B, the electronic device 101 may identify whether there is an attempt to make a call to an external electronic device (e.g., the first electronic device 505) by using the first subscriber identity module 410. The first external electronic device 505 may include a UE capable of a call service.

The electronic device 101 may repeat operation 520, based on no attempt to make a call to the first external electronic device 505 (No in operation 520). The electronic device 101 may perform operation 522, based on an attempt to make a call to the first external electronic device 505 (operation 520-Yes).

In operation 522 of FIG. 5B, the first subscriber identity module 410 may request the first server 501 to make a call connection to the first external electronic device 505.

In operation 524 of FIG. 5B, the electronic device 101 may perform a call connection with the first external electronic device 505 by using the first subscriber identity module 410. Operation 526 indicates a state in which the electronic device 101 is making a call connection with the first external electronic device 505 by using the first subscriber identity module 410. Although operations 520 to 524 have been described based on a situation in which the electronic device 101 requests a call connection to the external electronic device 505, a call connection may be performed by operation 526 even in a situation in which the electronic device 101 is requested by the external electronic device 505 to make a call connection.

In operation 528 of FIG. 5B, the first server 501 may transmit, to the second server 503, a message indicating that the electronic device 101 is performing a call by using the first subscriber identity module 410.

In operation 530 of FIG. 5B, the second server 503 may identify that the electronic device 101 is performing a call using the first subscriber identity module 410, based on a message received from the first server 501.

In following operation 532 of FIG. 5B, a call request regarding the second subscriber identity module 420 may occur from the second external electronic device 507. The second server 503 may receive a call request from the second external electronic device 507. The second external electronic device 507 may include a UE capable of a call service, similarly to the first external electronic device 505.

In operation 534 of FIG. 5B, the second server 503 may transmit, to the second external electronic device 507, a message indicating that the electronic device 101 is making a call. The second server 503 may use an SIP message for indicating that a call is in progress or may use other SIP messages for indicating that a call is in progress due to a dual SIM state.

In following operation 536 of FIG. 5B, the second server 503 may store a missed call from the second external electronic device 507 in the memory (e.g., the memory 440 in FIG. 4). The second server 503 may store, in the memory 440, a time at which the missed call from the second external electronic device 507 was attempted.

In operation 540 of FIG. 5B, the electronic device 101 may identify whether the call with the first external electronic device 505 has been terminated. In case that the call with the first external electronic device 505 is not terminated (No in operation 540), the electronic device 101 may periodically repeat operation 540.

Based on termination of the call with the first external electronic device 505 (Yes in operation 540), the electronic device 101 may transmit, to the first server 501, a message (e.g., SIP message) indicating that the call with the first external electronic device 505 has been terminated, in operation 542. In operation 544, the first server 501 may identify that the call between the electronic device 101 and the first external electronic device 505 has been terminated.

In operation 546 of FIG. 5B, the first server 501 may transmit, to the second server 503, a message indicating that the call using the first subscriber identity module 410 has been terminated. In operation 548, the second server 503 may identify that the electronic device 101 has terminated the call using the first subscriber identity module 410, based on the message received from the first server 501.

In operation 550 of FIG. 5B, the second server 503 may transmit, to the second external electronic device 507, a message indicating that the call of the electronic device 101 has been terminated, and that a call is currently available. Operation 550 may not be an essential operation, and operation 552 may be performed without operation 550 after operation 548.

In operation 552 of FIG. 5B, the second server 503 may transmit a message indicating that there was a missed call from the second external electronic device 507 to the second subscriber identity module 420. The message indicating that there has been a missed call may be transmitted from the second server 503 by using a text messaging service or a SIP message.

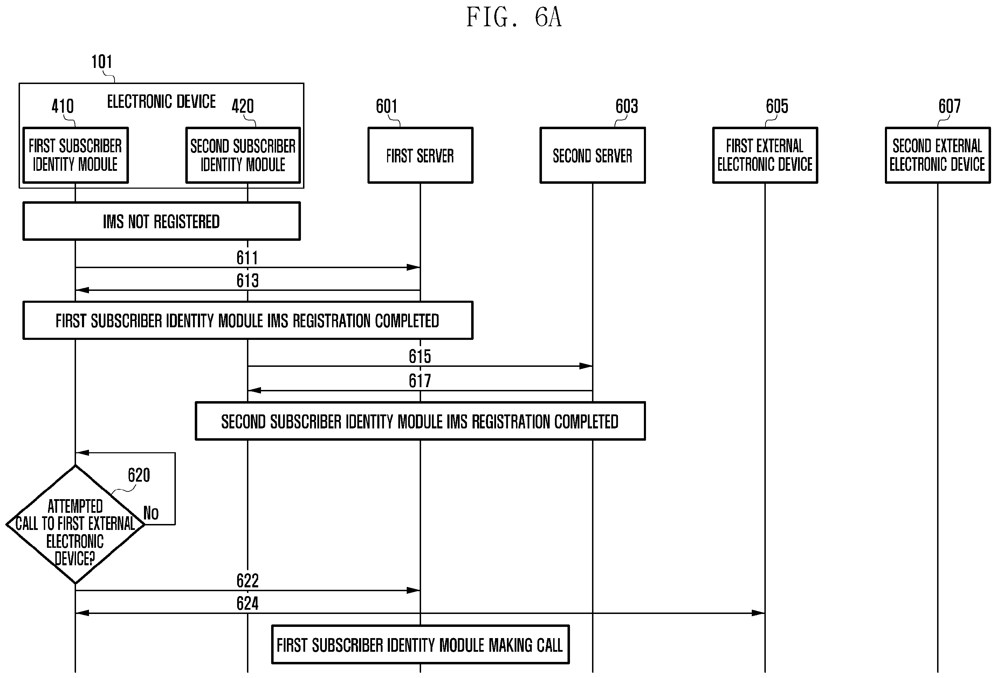

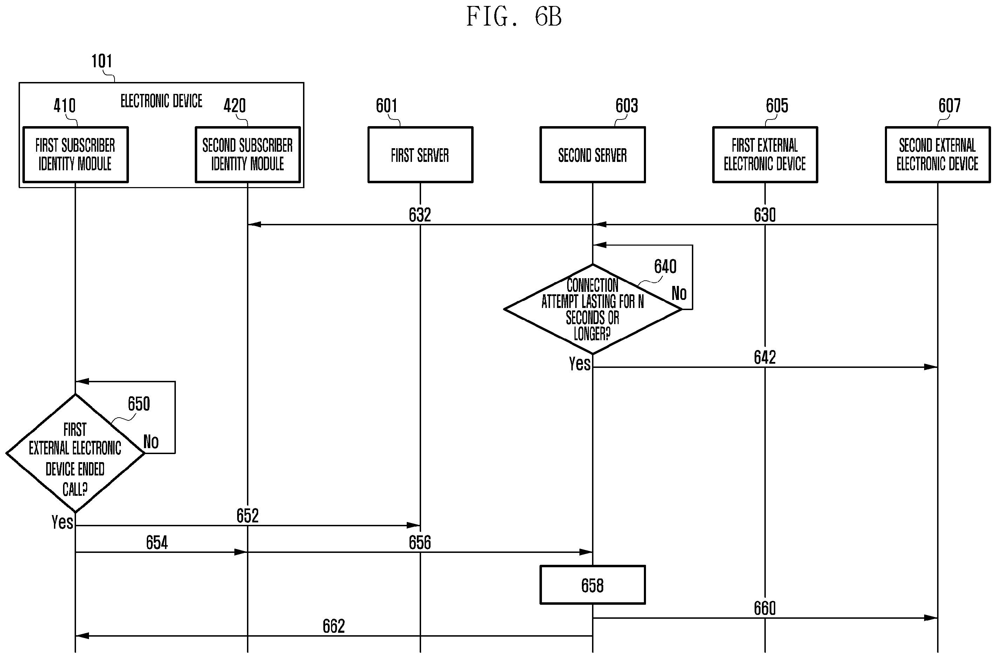

FIG. 6A and FIG. 6B illustrate an embodiment for controlling multiple subscriber identity modules on a communication system according to the disclosure.

The operations in FIG. 6A and FIG. 6B may be performed regardless of FIG. 5A and FIG. 5B.

Respective operations in FIG. 6A and FIG. 6B may be changed in order, some of the operations may be omitted or performed in parallel.

The communication system may include an electronic device 101, a first server 601, a second server 603, a first external electronic device 605, and a second external electronic device 607. The electronic device 101 may include a first subscriber identity module 410 and a second subscriber identity module 420. The first subscriber identity module 410 and the second subscriber identity module 420 are as described in FIG. 4.

The first server 601 may include an IP multimedia subsystem (IMS) server of the first subscriber identity module 410. The second server 603 may include an IMS server of the second subscriber identity module 420. IMS registration may refer to a process in which an electronic device 101 makes registration on a network in order to use a service in a communication system. The service provider may determine which service may be provided to the electronic device 101, based on IMS registration.

In operation 611 of FIG. 6A, the first subscriber identity module 410 may transmit a message (e.g., SIP REGISTER) for attempting IMS registration to the first server 601. The message (e.g., SIP REGISTER) for IMS registration may not include information (e.g., universally unique ID (UUID)) of the second subscriber identity module 420.

In operation 613 of FIG. 6A, the first server 601 may transmit, to the first subscriber identity module 410, a message (e.g., SIP REGISTER 200 OK) indicating that IMS registration has been completed.

In a state in which IMS registration of the first subscriber identity module 410 is completed, the protocol stack of the second subscriber identity module 420 may transmit a message for attempting IMS registration to the first server 601. In operation 615, the second subscriber identity module 420 may transmit a message (for example, SIP REGISTER) for attempting IMS registration to the second server 603. The message (e.g., SIP REGISTER) for IMS registration may not include information (e.g., universally unique ID (UUID)) of the first subscriber identity module 410.

In operation 617 of FIG. 6A, the second server 603 may transmit a message (e.g., SIP REGISTER 200 OK) indicating that IMS registration of the second subscriber identity module 420 has been completed. Through operation 617, IMS registration of the second subscriber identity module 420 may be completed.

In operation 620 of FIG. 6A, the electronic device 101 may identify whether there is an attempted call to the first external electronic device 605 by using the first subscriber identity module 410. The first external electronic device 605 may include a UE capable of a call service.

The electronic device 101 may repeat operation 620, based on no attempted call to the first external electronic device 605 (No in operation 620). The electronic device 101 may perform operation 622, based on an attempted call to the first external electronic device 605 (Yes in operation 620).

In operation 622 of FIG. 6A, the first subscriber identity module 410 may request a call with the first external electronic device 605 to the first server 601. In operation 624, the electronic device 101 may make a call connection with the first external electronic device 605 by using the first subscriber identity module 410. The first server 601 may identify that the electronic device 101 is making a call using the first subscriber identity module 410.

Although operations 620 to 624 have been described based on the assumption that the electronic device 101 requests a call connection to the external electronic device 505, a call connection may also be made even when the electronic device 101 receives a call connection request from the external electronic device 605.

In operation 630 in FIG. 6B, the second external electronic device 607 may transmit a message for requesting a call connection to the second server 603 to make a call connection with the electronic device 101.

In operation 632 of FIG. 6B, the second server 603 may send an incoming call request to the second subscriber identity module 420, based on the call connection request of the second external electronic device 607. The second server 402 may have failed to identify that the electronic device 101 is making a call using the first subscriber identity module 410. The electronic device 101 may not be able to respond to the incoming call request regarding the second subscriber identity module 420 due to antenna occupation a while a call is being made using the first subscriber identity module 410.

In operation 640 in FIG. 6B, the second server 603 may send an incoming call request to the second subscriber identity module 420 and may identify whether the connection attempt time exceeds a designated time (e.g., n seconds). The second server 603 may repeat operation 640, based on the call connection attempt time being less than the designated time (e.g., n seconds) (No in operation 640). The designated time (e.g., n seconds) may vary depending on the configuration. The second server 603 may perform operation 642, based on the call connection attempt time being equal to or longer than (or exceeding) the designated time (e.g., n seconds) (Yes in operation 640).

In operation 642 of FIG. 6B, the second server 603 may transmit a message indicating that the call connection has failed to the second external electronic device 607.

In following operation 650, the electronic device 101 may identify whether the call with the first external electronic device 605 has been terminated. In case that the call with the first external electronic device 605 is not terminated (No in operation 650), the electronic device 101 may periodically repeat operation 650.

Based on termination of the call with the first external electronic device 605 (Yes in operation 650), the electronic device 101 may transmit, in operation 652, a message indicating that the call with the first external electronic device 605 has been terminated to the first server 601.

After the call between the electronic device 101 and the first external electronic device 605 is terminated, the first protocol stack (or IMS stack) including the first subscriber module 410 may inform the second protocol stack (or IMS stack) including the second subscriber module 420 that the call of the first protocol stack including the first subscriber module 410 is terminated, in operation 654. The first protocol stack and the second protocol stack may include a dedicated module in the modem end for managing the call service.

The first protocol stack and the second protocol stack may use a dedicated message between multiple stacks to notify of call termination. Alternatively, the first protocol stack and the second protocol stack may update the call state between multiple stacks to notify of call termination. Alternatively, the processor (e.g., the processor 400 in FIG. 4) may manage all of the multiple protocol stacks and may notify that the call of the first protocol stack including a first subscriber identity module 410 has been terminated.

In operation 656 of FIG. 6B, the protocol stack of the second subscriber identity module 420 may transmit a message indicating that the call using the first subscriber identity module 410 has been terminated to the second server 603. The message indicating that the call using the first subscriber identity module 410 has been terminated may include information regarding the call start time and the call end time using the first subscriber identity module 410.

The electronic device 101 may transmit information regarding the call start time and the call end time using the first subscriber identity module 410 to the second server 603 by using a message as in Table 2 below:

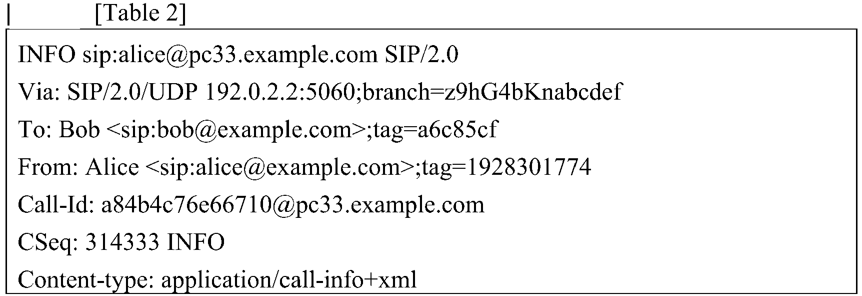

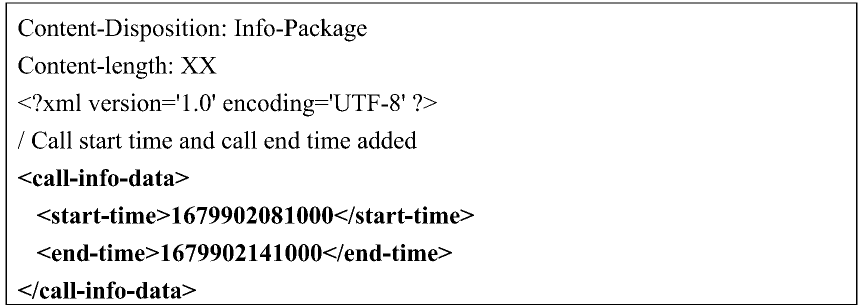

The call start time and end time may be indicated by the "start-time" tag and "end-time" tag, respectively, inside the "call-info-data" XML. The call time may be expressed, for example, in terms of unix time. In operation 658 of FIG. 6B, the second server 603 may identify, based on received information, whether there was a call request to the second subscriber identity module 420 during a call time using the first subscriber identity module 410 by identifying the call history.

In operation 660 of FIG. 6B, the second server 603 may transmit, to the second external electronic device 607, a message indicating the cause of a call failure, based on existence of a call request regarding the second subscriber identity module 420 during the call time using the first subscriber identity module 410. The message indicating the call failure cause may include information indicating that there was an ongoing call using the first subscriber identity module 410. Operation 660 may not be a necessary operation, and after operation 658, operation 662 may be performed without operation 660.

The second server 603 may transmit a message indicating that the current call of the current electronic device 101 is terminated and/or a message indicating that the current electronic device 101 is available for a call to the second external electronic device 607.

In operation 662 of FIG. 6B, the second server 603 may transmit a message indicating that there was a missed call from the second external electronic device 607 to the electronic device 101. The message indicating that there was a missed call may be transmitted from the second server 603 by using a text messaging service or an SIP message.

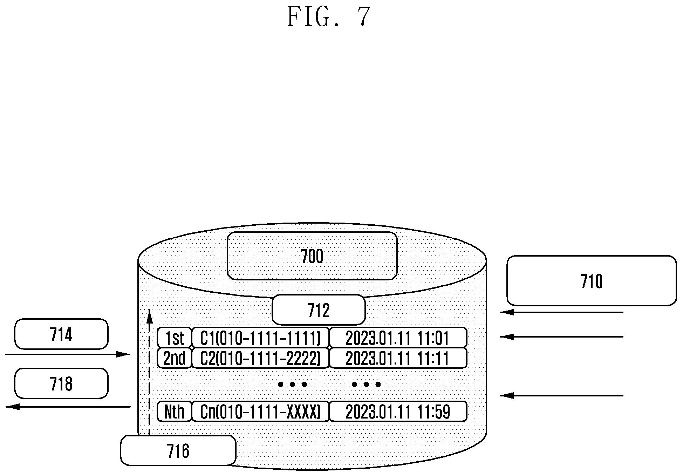

FIG. 7 illustrates a configuration of managing missed calls in a communication system according to an embodiment.

Reference numeral 700 illustrates a database (DB) for storing call records on a second server (e.g., the second server 603 in FIG. 6A).

In operation 710 of FIG. 7, the second server 603 may store a call request received from at least one external electronic device in the database (DB). The second server 603 may perform a call connection between the external electronic device and the electronic device 101 by using the second subscriber identity module (e.g., the second subscriber identity module 420 in FIG. 4) in case that the electronic device (e.g., the electronic device 101 in FIG. 1) is available for a call.

In operation 712 of FIG. 7, the second server 603 may record, in the database (DB), that there is a missed call in connection with a call request received from the external electronic device in case that the electronic device 101 is making a call by using the first subscriber identity module (e.g., the first subscriber identity module 410 in FIG. 4). In addition, the second server 603 may store the time at which the missed call was received in the database (DB).

In operation 714 of FIG. 7, the second server 603 may receive a message indicating that the call using the first subscriber identity module 410 has been terminated, from the first server (e.g., the first server 601 in FIG. 6). The second server 603 may identify information regarding the start time and end time of the call using the first subscriber identity module 410.

In operation 716 of FIG. 7, the second server 603 may identify whether there is a missed call record regarding the second subscriber identity module 420 between the start time and the end time of the call using the first subscriber identity module 410.

In operation 718 of FIG. 7, the second server 603 may transmit, to the first server 601, a message indicating that there was a missed call, based on existence of a missed call record between the start time and the end time of the call using the first subscriber identity module 410.

The processor 120 of the second server 603 may receive, from an electronic device (e.g., UE A) including a first subscriber identity module for storing first subscriber identity information and a second subscriber identity module for storing second subscriber identity information, a message for requesting IP multimedia subsystem (IMS) registration of the electronic device, and may perform IMS registration regarding the second subscriber identity module of the electronic device (e.g., UE A), based on the second subscriber identity information included in the message. The processor 120 may request a call connection to the electronic device (e.g., UE A) by using the second subscriber identity module, based on receiving a call request regarding the electronic device (e.g., UE A) from an external electronic device (e.g., UE B), and may transmit, to the external electronic device (e.g., UE B), a message indicating that the electronic device (e.g., UE A) is having a call, based on the call connection request time regarding the electronic device (e.g., UE A) exceeding a designated level.

The processor 120 of the second server 603 may receive a message including information regarding a call start time and a call end time using the first subscriber identity module from the electronic device (e.g., UE A), and may identify whether there was a call connection request using the second subscriber identity module between the call start time and the call end time using the first subscriber identity module, based on the received message. The processor 120 may transmit, to the electronic device (e.g., UE A), a message indicating that there is a missed call from the external electronic device (e.g., UE A), based on existence of a call connection request using the second subscriber identity module between the call start time and the call end time using the first subscriber identity module.

The processor 120 of the second server 603 may receive a message including information regarding a call start time and a call end time using the first subscriber identity module from the electronic device (e.g., UE A), and may identify whether there was a call connection request using the second subscriber identity module between the call start time and the call end time using the first subscriber identity module, based on the received message. The processor 120 may transmit, to the external electronic device (e.g., UE B), a message indicating that the electronic device (e.g., UE A) is available for a call, based on existence of a call connection request using the second subscriber identity module between the call start time and the call end time using the first subscriber identity module.

The processor 120 of the second server 603 may store, in the memory 130, the time at which a call request has been received, based on existence of a call connection request using the second subscriber identity module between the call start time and the call end time using the first subscriber identity module.

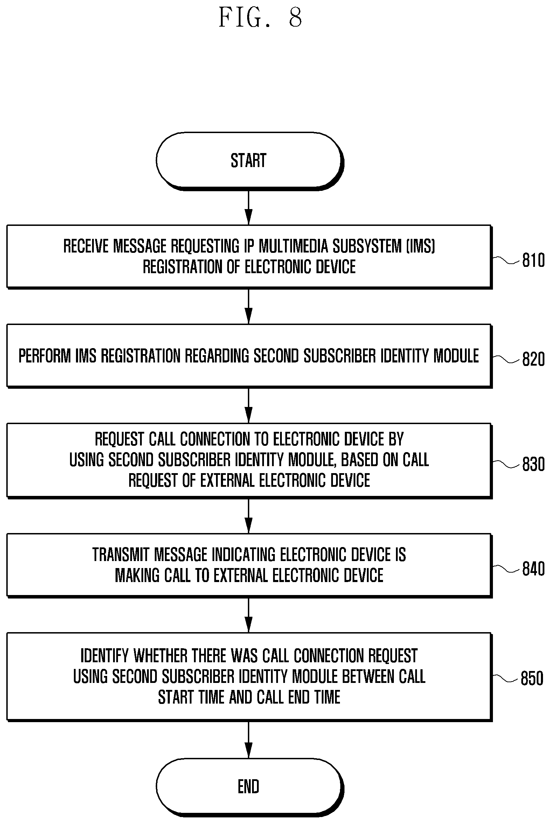

FIG. 8 is a flowchart illustrating an embodiment in which multiple subscriber identity modules are controlled on a second server according to the disclosure.

The operations described through FIG. 8 may be implemented based on instructions which may be stored in a computer recording medium or a memory (e.g., the memory 130 in FIG. 1). The illustrated method may be executed by the electronic device (e.g., the electronic device 101 in FIG. 1) previously described with reference to FIG. 1 to FIG. 7, and technical features described above will be omitted in the following description. The order of respective operations in FIG. 8 may be changed, some operations may be omitted, and some operations may be performed simultaneously.

In operation 810 of FIG. 8, the second server (e.g., the second server 603 in FIG. 6) may receive a message requesting IP multimedia subsystem (IMS) registration of the electronic device 101. The second server 603 may receive, from an electronic device 101 including a first subscriber identity module 410 configured to store first subscriber identity information and a second subscriber identity module 420 configured to store second subscriber identity information, a message requesting an IP multimedia subsystem (IMS) registration of the electronic device 101.

The first server (e.g., the first server 601 in FIG. 6) may include an IP multimedia subsystem (IMS) server of the first subscriber identity module 410. The second server 603 may include an IMS server of the second subscriber identity module 420. IMS registration may refer to a process in which an electronic device 101 makes registration on a network to use a service in a communication system. The service provider may determine which service may be provided to the electronic device 101, based on the IMS registration.

The first server 601 and the second server 603 may enable information interworking through contracts between the operators. In a state in which neither the first subscriber identity module 410 nor the second subscriber identity module 420 is IMS-registered, the protocol stack of the first subscriber identity module 410 may transmit a message for attempting IMS registration to the first server 601.

In a state where the IMS registration of the first subscriber identity module 410 is completed, the protocol stack of the second subscriber identity module 420 may transmit a message for attempting IMS registration to the second server 603.

In operation 820 of FIG. 8, the second server 603 may perform IMS registration regarding the second subscriber identity module 420, based on the second subscriber identity information included in a message for attempting IMS registration.

In operation 830 in FIG. 8, the second server 603 may request a call connection to the electronic device 101 by using the second subscriber identity module 420, based on a call request from an external electronic device (e.g., the second external electronic device 607 in FIG. 6A).

In operation 840 of FIG. 8, the second server 603 may transmit, to the external electronic device 607, a message indicating that the electronic device 101 is making a call.

The second server 603 may transmit, to the external electronic device 607, a message indicating that the electronic device 101 is making a call, based on the call connection request time regarding the electronic device 101 exceeding a designated level.

The second server 603 may receive call connection information from the first server 601 in a situation in which the electronic device 101 has made a call connection by using the first subscriber identity module 410. The second server 603 may identify that the electronic device 101 is making a call by using the first subscriber identity module 410, based on the received call connection information.

The second server 603 may receive, from the first server 601, a message indicating that the call using the first subscriber identity module 410 has been terminated. The second server 603 may identify that the call using the first subscriber identity module 410 has been terminated, based on the message received from the first server 601. The second server 603 may transmit, to the second external electronic device 507, a message indicating that the electronic device 101 has ended the previous call and is now available for a call. The second server 603 may notify the electronic device 101 of a call attempt from the second external electronic device 607 by using a session initiation protocol (SIP) message, and/or may transmit a message indicating that the electronic device 101 is now available for a call to the second external electronic device 607.

In operation 850 of FIG. 8, the second server 603 may identify whether there is a call connection request using the second subscriber identity module 420 between the call start time and the call end time. The call time and the end time may be indicated by a "start-time" tag and an "end-time" tag, respectively, in the "call-info-data" xml. The call time may be expressed, for example, in terms of unix time.

The second server 603 may receive a message including information about a call start time and a call end time using the first subscriber identity module 410 from the electronic device 101.

Based on the received message, the second server 603 may identify whether there was a call connection request using the second subscriber identity module 420 between the call start time and the call end time using the first subscriber identity module 410.

The second server 603 may transmit, to the electronic device 101, a message indicating that there is a missed call from the external electronic device 607, based on existence of a call connection request using the second subscriber identity module 420 between the call start time and the call end time using the first subscriber identity module 410.

The second server 603 may receive a call request regarding the electronic device 101 from the external electronic device 607, determine that the electronic device 101 is making a call state based on the call connection request time regarding the electronic device 101 exceeding a designated level, and store the time at which the call request is received from the external electronic device 607 in the memory 130.

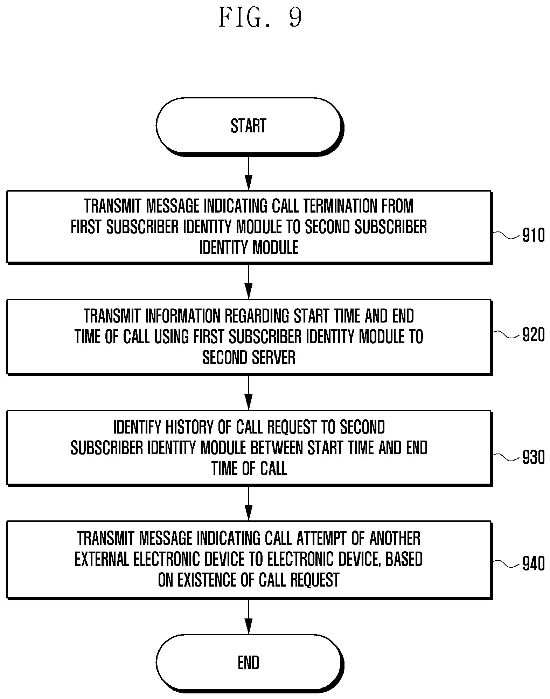

FIG. 9 is a flowchart illustrating an embodiment of controlling multiple subscriber identity modules in a communication system according to the disclosure.

The operations described through FIG. 9 may be implemented based on instructions which may be stored in a computer recording medium or a memory (e.g., the memory 130 in FIG. 1). The illustrated method may be executed by the electronic device (e.g., the electronic device 101 in FIG. 1) previously described with reference to FIG. 1 to FIG. 7, and technical features described above will be omitted in the following description. The order of respective operations in FIG. 9 may be changed, some operations may be omitted, and some operations may be performed simultaneously.

In operation 910 of FIG. 9, the electronic device 101 may transmit a message indicating call termination to the second subscriber identity module (for example, the second subscriber identity module 420 in FIG. 4) by using the first subscriber identity module (for example, the first subscriber identity module 410 in FIG. 4). The electronic device 101 may determine whether there is an attempted call to the first external electronic device 605 by using the first subscriber identity module 410. The first external electronic device 605 may include a UE capable of a call service.

The electronic device 101 may make a call connection with a first external electronic device (e.g., the first external electronic device 605 in FIG. 6) by using the first subscriber identity module 410. The first server (e.g., the first server 601 in FIG. 6) may identify that the electronic device 101 is making a call using the first subscriber identity module 410.

The electronic device 101 may identify whether the call with the first external electronic device 605 has been terminated. The electronic device 101 may transmit, to the first server 601, a message indicating that the call with the first external electronic device 605 has been terminated, based on termination of the call with the first external electronic device 605.

In operation 920 of FIG. 9, the electronic device 101 may transmit information regarding the start time and end time of the call using the first subscriber identity module 410 to the second server (e.g., the second server 603 in FIG. 6). The message indicating that the call using the first subscriber identity module 410 has been terminated may include information regarding the call start time and the call end time using the first subscriber identity module 410.

The call time and the end time may be indicated by a "start-time" tag and an "end-time" tag, respectively, in the "call-info-data" xml. The call time may be expressed, for example, in terms of unix time.

In operation 930 of FIG. 9, the second server 603 may identify the history of call request to the second subscriber identity module 420 between the start time and end time of a call using the first subscriber identity module 410.

According to an embodiment, based on existence of a call request from the second external electronic device 607 through the second subscriber identity module 420, the second server 603 may store information regarding the call request in the database of the second server 603.

According to an embodiment, based on detecting a call request of the second external electronic device 607 between the start time and end time of the call using the first subscriber identity module, the second server 603 may transmit, to the electronic device 101, information regarding whether the second external electronic device 607 has attempted a call and the time of the call attempt.

According to an embodiment, the electronic device 101 may store information regarding the start time and end time of the call using the first subscriber identity module 410 in the database of the second server 603, based on termination of the call between the electronic device 101 and the first external electronic device 605 using the first subscriber identity module 410.

The second server 603 may identify, on the database, whether there was a call request of the second external electronic device 607 between the start time and end time of the call using the first subscriber identity module 410.

In operation 940 of FIG. 9, the second server 603 may transmit, to the electronic device 101, a message indicating that another external electronic device (e.g., the second external electronic device 607 in FIG. 6) has attempted to make a call, based on existence of a call request. The processor 400 may receive a message indicating that there was a missed call from the second server 603.

According to an embodiment, the second server 603 may identify the history of a call request to the second subscriber identity module 420 between the start time and end time of the call using the first subscriber identity module 410, and may transmit, to the second external electronic device 607, a message indicating that a call connection has failed because the electronic device 101 was making a call with another external device, based on existence of the history of call from the second external electronic device 607.

According to an embodiment, the second server 603 may transmit, to the external electronic device 607, a message indicating that the electronic device 101 has completed the call with another external device and is currently available for a call.

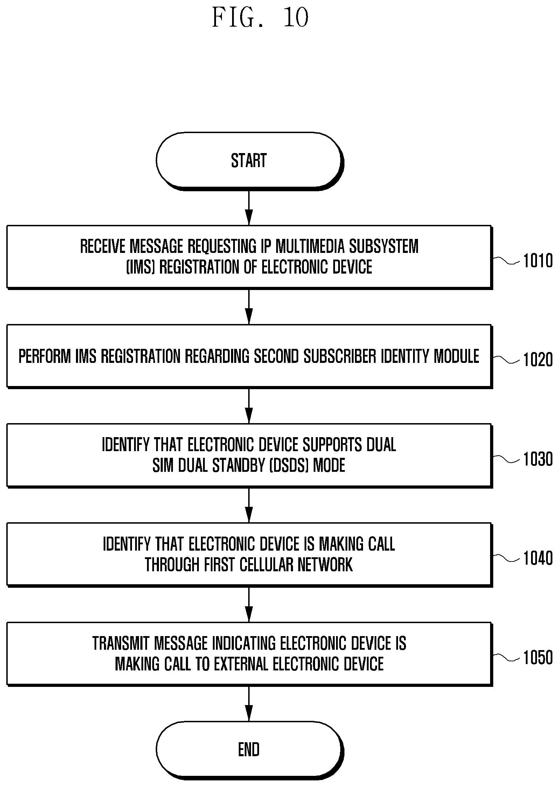

FIG. 10 is a flowchart illustrating an embodiment of controlling multiple subscriber identity modules on a second server according to the disclosure.

The operations described through FIG. 10 may be implemented based on instructions which may be stored in a computer recording medium or a memory (e.g., the memory 130 in FIG. 1). The illustrated method may be executed by the electronic device (e.g., the electronic device 101 in FIG. 1) previously described with reference to FIG. 1 to FIG. 7, and technical features described above will be omitted in the following description. The order of respective operations in FIG. 10 may be changed, some operations may be omitted, and some operations may be performed simultaneously.

In operation 1010, the second server (e.g., the second server 503 in FIG. 5A) may receive a message for requesting IP multimedia subsystem (IMS) registration of the electronic device 101.

The second server 503 may include an IMS server of the second subscriber identity module 420. IMS registration may refer to a process in which an electronic device 101 makes registration on a network to use a service in a communication system. The service provider may determine which service may be provided to the electronic device 101, based on the IMS registration.

The first server 501 and the second server 503 may be capable of information interworking through a contract between service providers. The protocol stack of the first subscriber identity module 410 may transmit a message for attempting IMS registration to the first server 501 in a state in which neither the first subscriber identity module 410 nor the second subscriber identity module 420 is IMS-registered.

The protocol stack of the second subscriber identity module 420 may transmit a message for attempting IMS registration to the second server 603 in a state in which IMS registration of the first subscriber identity module 410 has been completed.

In operation 1020, the second server 503 may perform IMS registration regarding the second subscriber identity module.

The second server 503 may receive a session initiation protocol (SIP) REGISTER message including a universally unique ID (UUID) of the first subscriber identity module 410, during IMS registration of the second subscriber identity module 420 in a state in which the first subscriber identity module 410 is IMS-registered on the first server (e.g., the first server 501 in FIG. 5A).

The second server 503 may transmit a message including the UUID of the first subscriber identity module 410 to the first server 501.

The second server 503 may transmit the UUID of the first subscriber identity module 410 to all IMS servers and may determine a server from which a response is received is the first server 501.

Alternatively, the second server 503 may distinguish the operator based on a specific value of the UUID, and may determine the first server 501 based on the distinguished operator information.

Alternatively, the second server 503 may receive the UUID of the first subscriber identity module 410 from the electronic device 101, and may also receive, separately from the UUID, operator-related information which may be used to specify the operator of the first subscriber identity module 410. The second server 503 may search for the first server 501, based on the received operator-related information, and transmit the UUID of the first subscriber identity module 410.

The second server 503 may transmit a message including the universally unique ID (UUID) of the first subscriber identity module 410 to the first server 501 after the second subscriber identity module 420 has been IMS-registered on the second server 503. Specifically, the information (e.g., universally unique ID (UUID)) of the first subscriber identity module 410 may be included in the Ex-contacts field in the SIP REGISTER message.

In operation 1030, the second server 503 may identify that the electronic device 101 supports a dual SIM dual standby (DSDS) mode.

The second server 503 may identify that the electronic device 101 is currently using the first subscriber identity module 410 as a dual SIM and is IMS-registered, by using information (e.g., universally unique ID (UUID)) of the first subscriber identity module 410.

The second server 503 may transmit, to the first server 501, a message indicating that the first subscriber identity module 410 and the second subscriber identity module 420 have been IMS-registered as dual SIMs. In this process, the first server 501 and the second server 503 may identify that the first subscriber identity module 410 and the second subscriber identity module 420 are dual SIMs.

In operation 1040, the second server 503 may identify that the electronic device 101 is performing a call through the first cellular network.

In case that the second server 503 receives, from another IMS server (e.g., the first server 501) corresponding to first subscriber identity information, a message indicating that the electronic device 101 is performing a call through the first cellular network corresponding to the first subscriber identity information, the second server 503 may identify that the electronic device 101 is performing a call through the first cellular network.

In operation 1050, the second server 503 may transmit a message indicating that the electronic device 101 is making a call to the external electronic device 507. The second server 503 may transmit, to the external electronic device 507, a message indicating that the electronic device 101 is making a call, based on receiving a call request regarding the electronic device 101 from the external electronic device 507.

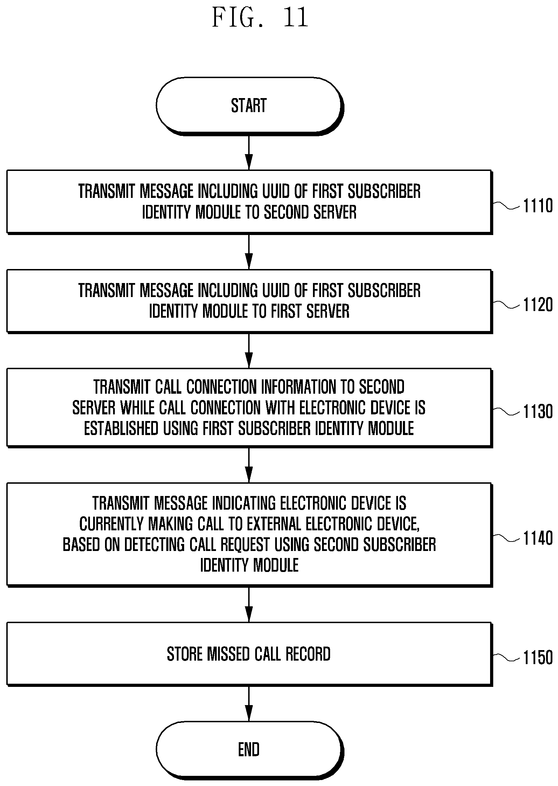

FIG. 11 is a flowchart illustrating an embodiment of controlling multiple subscriber identity modules on a communication system according to the disclosure.

The operations described through FIG. 11 may be implemented based on instructions which may be stored in a computer recording medium or a memory (e.g., the memory 130 in FIG. 1). The illustrated method may be executed by the electronic device (e.g., the electronic device 101 in FIG. 1) previously described with reference to FIG. 1 to FIG. 7, and technical features described above will be omitted in the following description. The order of respective operations in FIG. 11 may be changed, some operations may be omitted, and some operations may be performed simultaneously.

In operation 1110 of FIG. 11, the electronic device 101 may transmit a message including a universally unique ID (UUID) of a first subscriber identity module (for example, the first subscriber identity module 410 in FIG. 4) to a second server (for example, the second server 503 in FIG. 5).

The electronic device 101 may transmit a session initiation protocol (SIP) REGISTER message including a universally unique ID (UUID) of the first subscriber identity module 410 to the second server 530 during IMS registration of the second subscriber identity module 420 in a state in which the first subscriber identity module 410 is IMS-registered on the first server (e.g., a first server 501 in FIG. 5).

The first server 501 may include an IP multimedia subsystem (IMS) server of the first subscriber identity module 410. The second server 503 may include an IMS server of the second subscriber identity module 420. IMS registration may refer to a process in which the electronic device 101 makes registration on a network in order to use a service in a communication system. The service provider may determine which service may be provided to the electronic device 101, based on the IMS registration.

The first server 501 and the second server 503 may be capable of information interworking through a contract between service providers. The protocol stack of the first subscriber identity module 410 may transmit a message for attempting IMS registration to the first server 501 in a state in which neither the first subscriber identity module 410 nor the second subscriber identity module 420 is IMS-registered.

The protocol stack of the second subscriber identity module 420 may transmit a message for attempting IMS registration to the second server 503 in a state in which IMS registration of the first subscriber identity module 410 has been completed.

In operation 1120 of FIG. 11, the second server 503 may transmit a message including the UUID of the first subscriber identity module 410 to the first server 501. The second server 503 may transmit a message including the universally unique ID (UUID) of the first subscriber identity module 410 to the first server 501 after the second subscriber identity module 420 is IMS-registered on the second server 503. Specifically, information (e.g., universally unique ID (UUID)) of the first subscriber identity module 410 may be included in the Ex-contacts field in the SIP REGISTER message.

The second server 503 may identify that the electronic device 101 is currently using the first subscriber identity module 410 as a dual SIM and is IMS-registered, by using information (for example, universally unique ID (UUID)) of the first subscriber identity module 410.

The second server 503 may transmit a message indicating that the first subscriber identity module 410 and the second subscriber identity module 420 have been IMS-registered as dual SIMs to the first server 501. In this process, the first server 501 and the second server 503 may identify that the first subscriber identity module 410 and the second subscriber identity module 420 are dual SIMs.

In operation 1130 of FIG. 11, the electronic device 101 may transmit call connection information to the second server 503 in a situation in which a call connection is made with the electronic device 101 by using the first subscriber identity module 410. The electronic device 101 may transmit, to the second server 503, information indicating that the first subscriber identity module 410 is making a call in a situation in which a call connection between the first external electronic device (e.g., the first external electronic device 505 in FIG. 5) and the electronic device 101 is established, by using the first subscriber identity module 410.

The second server 503 may identify that the electronic device 101 is making a call by using the first subscriber identity module 410, based on the message received from the first server 501.

In operation 1140 of FIG. 11, the second server 503 may transmit a message indicating that the electronic device 101 is currently making a call to the second external electronic device (e.g., the second external electronic device 507 in FIG. 5), based on detecting a call request using the second subscriber identity module 420.

The second server 503 may transmit, to the second external electronic device 507, a message indicating that the electronic device 101 is currently making a call, based on detecting a call request using the second subscriber identity module 420 from the second external electronic device 507 while making a call by using the first subscriber identity module 410.

In operation 1150 of FIG. 11, the second server 503 may store the missed call record.

The first server 501 may transmit a message indicating that the call using the first subscriber identity module 410 has been terminated to the second server 503. The second server 503 may identify that the call using the first subscriber identity module 410 has been terminated, based on the message received from the first server 501. The second server 503 may transmit, to the second external electronic device 507, a message indicating that the electronic device 101 has terminated the call and is now available for a call. The second server 603 may notify the electronic device 101 that there was a call attempt by the second external electronic device 507 using a session initiation protocol (SIP) message, and/or may transmit a message indicating that the electronic device 101 is currently available for a call to the second external electronic device 507.

The second server 503 may store, in the memory (e.g., the memory 440 in FIG. 4), the time at which the missed call has been attempted by the second external electronic device 507.

The electronic device 101 may receive, from the second server 503, a message indicating that the second external electronic device 507 has attempted to make a call.

According to an embodiment, the processor 400 may receive a message including information regarding the call start time and the call end time using the first subscriber identity module 410 from the electronic device 101, and may identify whether there was a call connection request using the second subscriber identity module 420 between the call start time and the call end time using the first subscriber identity module 410, based on the received message. The processor 400 may transmit, to the external electronic device 507, a message indicating that a call connection has failed because the electronic device 101 was making a call, based on existence of a call connection request using the second subscriber identity module 420 between the call start time and the call end time using the first subscriber identity module 410.

According to an embodiment, a message requesting IP multimedia subsystem (IMS) registration of the electronic device 101 may include the universally unique ID (UUID) of the first subscriber identity module 410.

A method for operating a communication system may include: in case that an electronic device registers IMS of a second subscriber identity module 420 while a first subscriber identity module 410 is IMS-registered on a first server 501, transmitting a session initiation protocol (SIP) REGISTER message including a universally unique ID (UUID) of the first subscriber identity module to a second server 503 by using the second subscriber identity module; after the second subscriber identity module is IMS-registered on the second server, transmitting information including a universally unique ID (UUID) of the first subscriber identity module to the first server by using the second server; in a situation in which a call connection between the first external electronic device 505 and the electronic device 101 is established by using the first subscriber identity module, transmitting information indicating that the first subscriber identity module is making a call to the second server; based on detecting a call request using the second subscriber identity module from the second external electronic device 507 while the first subscriber identity module is making a call, transmitting a message indicating that the electronic device is currently making a call to the second external electronic device, by using the second server; and storing a missed call from the second external electronic device in the second server.

According to an embodiment, the method for operating a communication system may further include, based on termination of a call of the first subscriber identity module, transmitting a message indicating that the call of the first subscriber identity module has been terminated to the second server by using the first server, and transmitting a message notifying that there was a call attempt of the second external electronic device to the electronic device by using the second server.

According to an embodiment, the method for operating a communication system may further include, based on termination of the call of the first subscriber identity module 410, transmitting, by using the first server 501, a message indicating that the call of the first subscriber identity module 410 has been terminated to the second server 503; and transmitting, by using the second server 503, a message indicating that the electronic device 101 is now available for a call to the second external electronic device 507.

## Claims

1. An IP multimedia subsystem (IMS) server comprising:
a memory; and
a processor,
wherein the processor is configured to:
receive a message making a request for registering an IP multimedia subsystem (IMS) of an electronic device from the electronic device comprising a first subscriber identification module configured to store first subscriber identification information and a second subscriber identification module configured to store second subscriber identification information;
register the IMS for the second subscriber identification module of the electronic device, based on the second subscriber identification information included in the message;
make a request for a call connection using the second subscriber identification module to the electronic device, based on reception of a call request for the electronic device from an external electronic device; and
transmit a message indicating that the electronic device is having a call to the external electronic device, based on a call connection request time for the electronic device being longer than a predetermined level.

2. The IMS server of claim 1, wherein the processor is configured to:
receive a message containing information on a call start time and a call end time using the first subscriber identification module from the electronic device;
identify whether there is a request for a call connection using the second subscriber identification module between the call start time and the call end time using the first subscriber identification module, based on the received message; and
transmit a message indicating that there is a missing call from the external electronic device to the electronic device, based on existence of the request for the call connection using the second subscriber identification module between the call start time and the call end time using the first subscriber identification module.

3. The IMS server of claim 1, wherein the processor is configured to:
receive a message containing information on a call start time and a call end time using the first subscriber identification module from the electronic device;
identify whether there is a request for a call connection using the second subscriber identification module between the call start time and the call end time using the first subscriber identification module, based on the received message; and
transmit a message indicating that call of the electronic device to the external electronic device is possible, based on existence of the request for the call connection using the second subscriber identification module between the call start time and the call end time using the first subscriber identification module.

4. The IMS server of claim 1, wherein the processor is configured to:
receive a message containing information on a call start time and a call end time using the first subscriber identification module from the electronic device;
identify whether there is a request for a call connection using the second subscriber identification module between the call start time and the call end time using the first subscriber identification module, based on the received message; and
transmit a message indicating that the call connection has failed since the electronic device is having a call with the external electronic device, based on existence of the request for the call connection using the second subscriber identification module between the call start time and the call end time using the first subscriber identification module.

5. The IMS server of claim 1, wherein the processor is configured to:
receive a request for a call to the electronic device from the external electronic device; and
transmit a message indicating that the electronic device is having a call to the external electronic device, based on a call connection request time for the electronic device being longer than a predetermined level, and store a time at which the request for the call is received from the external electronic device in the memory.

6. The IMS server of claim 1, wherein a message requesting IP multimedia subsystem (IMS) registration of the electronic device comprises a universally unique ID (UUID) of the first subscriber identity module.

7. A communication system comprising:
an electronic device (101) configured to support dual subscriber identity module dual standby (DSDS);
a first server (501) configured to handle IP multimedia subsystem (IMS) registration of a first subscriber identity module;
a second server (503) configured to handle IP multimedia subsystem (IMS) registration of a second subscriber identity module; and
a processor (120),
wherein the processor is configured to:
based on termination of a call between the electronic device and a first external electronic device (505) using the first subscriber identity module, control the first subscriber identity module to transmit a message indicating that call termination to the second subscriber identity module;
transmits information regarding a start time and an end time of a call using the first subscriber identity module to the second server by using the second subscriber identity module;
identify history of a call requested to the second subscriber identity module between the start time and the end time of the call using the first subscriber identity module, by using the second server;
based on existence of a call request from a second external electronic device (507), transmit a message indicating that the second external electronic device has attempted a call to the electronic device; and
identify history of a call requested to the second subscriber identity module between the start time and the end time of the call using the first subscriber identity module, by using the second server.

8. The system of claim 7, wherein the processor is configured to, based on history of a call from the second external electronic device, transmit a message to the second external electronic device to inform that a call connection has failed because the electronic device was making a call with another external device.

9. The system of claim 8, wherein the processor is configured to transmit, by using the second server, a message indicating that the electronic device has finished a call with another external device and is currently available for a call.

10. The system of claim 8, wherein the processor is configured to store information regarding a call request in a database of the second server, based on existence of a call request of the second external electronic device through the second subscriber identity module.

11. The system of claim 10, wherein the processor is configured to:
based on termination of a call between the electronic device and the first external electronic device using the first subscriber identity module, store information regarding a start time and an end time of a call using the first subscriber identity module in a database of the second server; and
identify, in the database of the second server, whether there was a call request of the second external electronic device between the start time and end time of the call using the first subscriber identity module.

12. The system of claim 11, wherein the processor is configured to, based on detection of a call request of the second external electronic device between the start time and the end time of the call using the first subscriber identity module, transmit information regarding whether the second external electronic device has attempted a call and a call attempt time to the electronic device.

13. The system of claim 7, wherein a message requesting IP multimedia subsystem (IMS) registration of the electronic device comprises a universally unique ID (UUID) of the first subscriber identity module.

14. A method for operating a communication system, the method comprising:
in case that an electronic device registers IMS of a second subscriber identity module (420) while a first subscriber identity module (410) is IMS-registered on a first server (501), transmitting a session initiation protocol (SIP) REGISTER message comprising a universally unique ID (UUID) of the first subscriber identity module to a second server (503) by using the second subscriber identity module;
after the second subscriber identity module is IMS-registered on the second server, transmitting information comprising a universally unique ID (UUID) of the first subscriber identity module to the first server by using the second server;
in a situation in which a call connection between the first external electronic device (505) and the electronic device (101) is established by using the first subscriber identity module, transmitting information indicating that the first subscriber identity module is making a call to the second server;
based on detecting a call request using the second subscriber identity module from the second external electronic device (507) while the first subscriber identity module is making a call, transmitting a message indicating that the electronic device is currently making a call to the second external electronic device, by using the second server; and
storing a missed call from the second external electronic device in the second server.

15. The method of claim 14, further comprising:
based on termination of a call of the first subscriber identity module, transmitting a message indicating that a call of the first subscriber identity module has been terminated to the second server by using the first server; and
transmitting a message indicating that the second external electronic device has made a call attempt to the electronic device by using the second server.
